# EUROPÄISCHE PATENTSCHRIFT

(11) **EP 1 686 349 B1**
(45) Veröffentlichungstag und Bekanntmachung des Hinweises auf die Patenterteilung: **23.10.2013**
(21) Anmeldenummer: 06001278.8
(22) Anmeldetag: 21.01.2006
(51) Int. Cl.: G01B 21/02, F16H 61/28

(54) **Wegsensoranordnung für ein mechanisches Bauteil und Verfahren zum Montieren desselben**
Distance sensor system for a mechanical part and method for mounting the same
Dispositif de capteur de déplacement destiné à un composant mécanique et procédé de montage de celui-ci

(30) Priorität: 01.02.2005 DE 102005004489
(43) Veröffentlichungstag der Anmeldung: 02.08.2006
(73) Patentinhaber: ZF Friedrichshafen AG, 88038 Friedrichshafen (DE)
(72) Erfinder: Bader, Josef, 88045 Friedrichshafen (DE); Birkenmaier, Gerhard, 88069 Tettnang-Walchesreute (DE); Gessler, Frank, 88287 Grünkraut (DE)

(56) Entgegenhaltungen:
- WO-A-90/04122
- DE-A1- 4 428 273
- DE-A1- 19 535 755
- FR-A- 2 749 907
- US-A- 4 665 376
- US-A1- 2003 154 616

## Beschreibung

Die Erfindung betrifft eine Wegsensoranordnung gemäß dem Oberbegriff des Patentanspruches 1 sowie ein Verfahren zum Montieren einer derartigen Wegsensoranordnung.

Wegsensoren der im Oberbegriff des Anspruches 1 genannten Art werden in unterschiedlichen technischen Anwendungsbereichen eingesetzt. Ein typischer Anwendungsbereich findet sich bei Zahnrad-Schaltgetrieben, bei denen die Zahnräder über Schaltgabeln geschaltet werden, die mit manuell, halbautomatisch oder automatisch betätigten, längs verschiebbaren Schaltschienen verbunden sind. Der mittels der Wegsensoranordnung erfasste Verschiebeweg einer Schaltschiene wird als Wegsignal in einer Funktionssteuerung weiterverarbeitet, beispielsweise um den Synchronisiervorgang in einem synchronisierten Schaltgetriebe zu optimieren.

Aus der DE 196 52 971 A1 ist bereits ein synchronisiertes Stufenschaltgetriebe bekannt, bei welchem zusätzlich zu mechanischen Synchronisiereinrichtungen eine Antriebseinrichtung zur Änderung der Drehzahl einer Vorgelegewelle vorgesehen ist, mit deren Hilfe eine Drehzahlanpassung der miteinander zu koppelnden Wellen bei einem Schaltvorgang herbeigeführt werden soll. Zur Ansteuerung dieser Antriebseinrichtung werden unter anderem Wegsignale der jeweils bei einem Schaltvorgang betätigten Schaltschiene in die Funktionssteuerung eingegeben. Über die genaue Ausgestaltung der Wegsensoranordnung ist in der oben genannten Druckschrift nichts ausgesagt.

Bei herkömmlichen Wegsensoranordnungen der im Oberbegriff des Anspruches 1 genannten Art wird das Sensorgehäuse an einem ersten Bauteil und getrennt davon der Sensorschlitten an einem zweiten Bauteil montiert. Unter dem Begriff "Sensorgehäuse" wird im folgenden der Teil der Wegsensoranordnung verstanden, welcher den Weg des Sensorschlittens erfasst und - beispielsweise über eine darin angeordnete Leiterplatte mit Sendespule - als Wegsignal an die Funktionssteuerung weitergibt. Nachteilig bei derartigen Wegsensoranordnungen ist, dass für die getrennte Montage des Sensorschlittens ein zusätzlicher Montageaufwand erforderlich ist. Außerdem ist die Gefahr nicht auszuschließen, dass die Montage des Sensorschlittens bei der Herstellung des Getriebes vergessen wird, insbesondere wenn diese an einem anderen Montageort erfolgt als die Montage des Sensorgehäuses. Als weiterer Nachteil wird angesehen, dass die Schnittstelle zwischen Sensorschlitten und Sensorgehäuse schwieriger zu beherrschen ist, also beispielsweise eine Nullpunktjustierung der beiden Bauteile zueinander schwieriger einzustellen ist, und dass etwa durch Fertigungstoleranzen zwischen dem erstem und dem zweitem Bauteil bedingte unterschiedliche Luftspalttoleranzen die Signalübertragung beeinträchtigen, insbesondere größere Luftspalttoleranzen sich negativ auf die Signalgenauigkeit auswirken.

Aus den Schriften US 2003/0154616 A1, DE 44 28 273 A1 und US 4,665,376 A sind Wegsensoranordnungen bekannt, bei welchen durch einen Sensorschlitten, der in einem Sensorgehäuse geführt wird, ein Verschiebeweg zwischen einem ersten Bauteil, an welches das Sensorgehäuse koppel-bar ist, und einem zweiten Bauteil, an welches der Sensorschlitten koppelbar ist, erfasst werden kann.

Aus den Schriften WO 90/04122 A2, FR 2 749 907 A1 und DE 195 35 755 A1 sind ebenfalls Wegsensoranordnungen entnehmbar, allerdings ohne Sensorschlitten, wobei die hier Offenbarten zur Ermittlung des Verschiebeweges einer Schaltschiene eines Fahrzeuggetriebes dienen.

Vor diesem Hintergrund liegt der Erfindung die Aufgabe zugrunde, eine Wegsensoranordnung der im Oberbegriff des Anspruches 1 genannten Art sowie ein Verfahren zu deren Montage zu schaffen, welches gegenüber herkömmlichen Systemen folgende Vorteile aufweist: Die Montage soll vereinfacht und sicherer werden; die Schnittstellen- und Luftspalttoleranzproblematik soll verringert werden; der Sensorschlitten soll stets verliersicher mit dem Sensorgehäuse verbunden bleiben und der Sensorschlitten soll ohne gesonderten Montageaufwand in einfacher Weise mit dem zweiten Bauteil verbunden werden.

Die Lösung dieser Aufgabe ergibt sich aus den Merkmalen der unabhängigen Ansprüche 1 und 6, während vorteilhafte Ausgestaltungen und Weiterbildungen der Erfindung den diesen Ansprüchen jeweils nachgeordneten abhängigen Ansprüchen entnehmbar sind.

Der Erfindung liegt die Erkenntnis zugrunde, wonach die oben beschriebene technische Aufgabe am besten dadurch zu lösen ist, dass das Sensorgehäuse und der Sensorschlitten eine untrennbare, nach den Regeln eines präzisen Gerätebaus hergestellte Baueinheit bilden, wobei der Sensorschlitten bei der Montage der Wegsensoranordnung mit demjenigen Bauteil, dessen Verschiebebewegung gemessen werden soll, mitnahmeverbunden wird.

Die Erfindung geht demnach von einer Wegsensoranordnung zum Erfassen des Verschiebeweges eines mechanischen zweiten Bauteils gegenüber einem anderen ersten Bauteil aus, welche ein am ersten Bauteil montierbares Sensorgehäuse und einen mit diesem zusammenwirkenden, mit dem zweiten Bauteil koppelbaren Sensorschlitten umfasst.

Zur Lösung der gestellten Aufgabe sind folgende Maßnahmen vorgesehen, wobei sich Positions- und Richtungsangaben auf einen am ersten Bauteil montierten Zustand der Wegsensoranordnung bzw. des Sensorgehäuses beziehen: Der Sensorschlitten ist im Sensorgehäuse in Richtung des Verschiebeweges des verschiebbaren Bauteils verschiebbar gelagert, und am Sensorschlitten einerseits sowie an dem zweiten Bauteil andererseits sind miteinander zusammenwirkende Kopplungsmittel vorgesehen, welche miteinander in Eingriff bringbar sind.

Gemäß der Erfindung umfassen die Kopplungsmittel wenigstens ein federnd vorgespanntes Rastelement, welches bei einer vorgegebenen Verschiebestellung des ersten Bauteils gegenüber dem zweiten Bauteil selbsttätig einrastet. Auf diese Weise lässt sich die Kopplung des Sensorschlittens mit dem verschiebbaren Bauteil äußerst einfach bewerkstelligen, indem das Sensorgehäuse mit dem darin gelagerten Sensorschlitten zunächst unabhängig von der Stellung des verschiebbaren Bauteils am ersten Bauteil montiert und danach das zweite, verschiebbare Bauteil in die vorgegebene Verschiebestellung verschoben wird.

Eine konstruktive Ausgestaltung der Wegsensoranordnung sieht vor, dass an dem Sensorschlitten mittels Federelementen vorgespannte Rastelemente vorgesehen sind, welche bei der vorgegebenen Verschiebestellung des verschiebbaren Bauteils mit an diesem Bauteil ausgebildeten Rastelementen verrasten.

Damit die Wegsensoranordnung nach der Fertigmontage beispielsweise eine exakte Nullpunkt-Justierung hat, ist es erforderlich, dass der Sensorschlitten im Augenblick der Kopplung mit dem zweiten Bauteil eine definierte Position im Sensorgehäuse hat. Es ist demnach erforderlich, dass der Sensorschlitten im Anlieferzustand und im Montagezustand - das ist der Zustand nach der Montage des Sensorgehäuses am ersten Bauteil und vor der Kopplung mit dem zweiten Bauteil - im Sensorgehäuse in einer definierten Stellung fixiert ist.

Um diese definierte Position des Sensorschlittens im Anlieferzustand sowie im Montagezustand sicherzustellen, ist vorgesehen, dass das wenigstens eine Rastelement des Sensorschlittens bzw. mit diesem verbundene Bauelemente gegenüber dem Sensorgehäuse zwischen einer ersten, dem Anlieferzustand entsprechenden Endposition und einer zweiten, dem Montagezustand entsprechenden Endposition verstellbar ist, und dass in der ersten und der zweiten Endposition jeweils an dem Rastelement bzw. den damit verbundenen Bauelementen sowie an dem Sensorgehäuse ausgebildete Arretierungsmittel miteinander im Eingriff stehen.

Die Arretierungsmittel verhindern eine Verschiebung des Sensorschlittens im Sensorgehäuse, wobei dieselben bei einer zwischen der ersten und zweiten Endposition liegenden, einem Betriebszustand entsprechenden Zwischenposition außer Eingriff sind, so dass der Sensorschlitten sich dann mit dem zweiten Bauteil zusammen wegmesswirksam verschieben kann.

Im Anlieferzustand der Wegsensoranordnung befinden sich die Rastelemente in ihrer ersten, vollständig ausgefahrenen Endposition. Dabei ist der Sensorschlitten, wie oben beschrieben, in Verschieberichtung in einer definierten Position arretiert. Bei der Montage der Wegsensoranordnung am ersten Bauteil legen sich die Rastelemente an das zweite Bauteil an und werden durch dieses in ihre zweite Endposition zurückgeschoben, bei der der Sensorschlitten ebenfalls in Verschieberichtung arretiert ist.

Bei einer anschließenden Verschiebung des zweiten Bauteils kommen die an diesem ausgebildeten Rastelemente mit den am Sensorschlitten ausgebildeten Rastelementen zur Deckung, so dass diese miteinander verrasten, wobei die Arretierungsmittel außer Eingriff gelangen und der Sensorschlitten für eine Verschiebung gegenüber dem Sensorgehäuse frei wird.

Bei einer ersten Ausführungsvariante der erfindungsgemäßen Wegsensoranordnung umfasst der Sensorschlitten einen am Sensorgehäuse in einer zur Verschiebebewegung des Sensorschlittens senkrechten Richtung zwischen einer jeweils durch Anschlag bestimmten ersten Endposition und einer zweiten Endposition verstellbaren Cursorreiter, an welchem ein mit einer Rastausnehmung am zweiten Bauteil in Eingriff bringbarer Rastvorsprung ausgebildet ist.

Der Cursorreiter trägt einen in der gleichen Richtung bewegbaren Cursorträger, wobei zwischen Cursorreiter und Cursorträger Federmittel angeordnet sind, welche einerseits den Cursorträger an das Sensorgehäuse andrücken, und andererseits den Cursorreiter in Richtung der ersten Endposition drücken. Der Cursorreiter und der Cursorträger werden durch die zugeordneten Federmittel auseinander gespreizt und zwischen dem Sensorgehäuse und dem zweiten Bauteil eingespannt.

An jeweils die erste Endposition bzw. die zweite Endposition des Cursorreiters bestimmenden Anschlagflächen sind zusammenwirkende Arretierungsvorsprünge bzw. Arretierungsausnehmungen ausgebildet, welche bei diesen Endpositionen eine Verschiebung des Sensorschlittens gegenüber dem Sensorgehäuse verhindern.

Bei einer anderen konstruktiven Ausführungsvariante der Wegsensoranordnung umfasst der Sensorschlitten einen in einer zu seiner Verschieberichtung senkrechten Richtung unbeweglichen Cursorträger, an welchem wenigstens eine über einen federnd elastischen Arm zwischen einer ersten Endposition und einer zweiten Endposition quer zur Verschieberichtung bewegbare Rastnase oder dergleichen angeordnet ist, die in den beiden Endpositionen jeweils in am Sensorgehäuse ausgebildete Rastausnehmungen eingreift.

Diese Ausführungsvariante ist gegenüber der weiter vorne beschriebenen ersten Ausführungsvariante konstruktiv einfacher, wie anhand eines Ausführungsbeispieles dargelegt wird, erfüllt jedoch in gleicher Weise die weiter vorne beschriebene Forderung nach einer definierten Position des Sensorschlittens im Anlieferzustand und im Montagezustand.

Wenn eine Wegsensoranordnung gemäß der zweiten Ausführungsvariante zum Erfassen des Verschiebeweges einer Schaltschiene oder dergleichen mit einem im wesentlichen runden Querschnitt eingesetzt wird, wie man sie bei den weiter vorne erwähnten Zahnradschaltgetrieben vorfindet, dann ist gemäß der Erfindung vorgesehen, dass der Cursorträger zwei die Schaltstange umgreifende, jeweils eine Rastnase tragende federnd elastische gekrümmte Arme aufweist, und dass an der Schaltschiene eine zur Aufnahme der Rastnasen bestimmte Umfangsnut ausgebildet ist, wie anhand eines Ausführungsbeispieles noch genauer erläutert wird.

Ein erfindungsgemäßes Verfahren zum Montieren einer erfindungsgemäßen Wegsensoranordnung umfasst folgende Verfahrensschritte:

Das Sensorgehäuse wird am ersten Bauteil montiert und die Kopplungsmittel des Sensorschlittens werden mit Kopplungsmitteln des zweiten Bauteils in Eingriff gebracht.
Wenn die Kopplungsmittel federnd vorgespannte Rasteinrichtungen umfassen, dann wird nach dem Montieren der Wegsensoranordnung am ersten Bauteil das zweite Bauteil in die vorgegebene Verschiebestellung bewegt, bei der die Rasteinrichtungen selbsttätig einrasten.

Falls die Rastelemente zwischen zwei Endpositionen verstellbar sind, bei denen Arretierungsmittel im Eingriff sind, welche eine Verschiebung des Sensorschlittens im Sensorgehäuse verhindern, dann sieht das Montageverfahren vor, dass das Sensorgehäuse am ersten Bauteil montiert wird, wobei die Rastelemente durch Anlage am zweiten Bauteil aus der ersten, den Sensorschlitten in Verschieberichtung arretierenden Endposition in die zweite arretierende Endposition verstellt werden, und dass anschließend das zweite Bauteil in die vorgegebene Verschiebeposition verstellt wird, wobei die Rastelemente aus der zweiten Endposition in eine Zwischenposition gelangen, bei der die Arretierungsmittel außer Eingriff sind.

Mehrere Ausführungsbeispiele der Erfindung sind in der Zeichnung dargestellt und im folgenden näher beschrieben.

Es zeigen:
- Fig. 1: schematisch in einem Querschnitt eine Wegsensoranordnung mit einem Sensorschlitten, welcher einen Cursorträger, einen Cursorreiter und zwischen diesen angeordnete Federmittel umfasst,
- Fig. 2: in einer perspektivischen Darstellung eine Wegsensoranordnung mit einem Sensorschlitten, welche einen Cursorträger mit zwei federnd elastischen Armen umfasst und
- Fig. 3: in einem Querschnitt eine Detailansicht der Fig. 2.

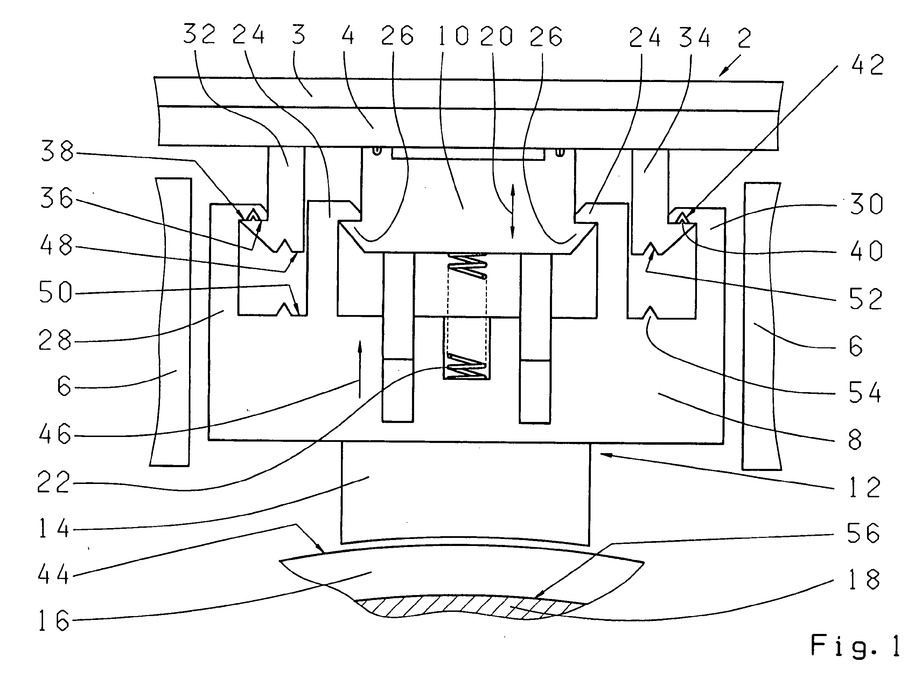

Die in Fig. 1 dargestellte und im folgenden beschriebene Wegsensoranordnung stellt eine Anordnung dar, wie sie beispielsweise in einem Zahnradschaltgetriebe eingesetzt werden kann, um die Wegverschiebung einer Schaltschiene zu erfassen.

Die als Ganzes mit 2 bezeichnete Wegsensoranordnung umfasst ein Sensorgehäuse 4, welches auf eine nicht näher dargestellte Weise in einem Getriebegehäuse 6 montiert wird. Am Sensorgehäuse 4 ist eine Leiterplatte 3 mit nicht gezeigter Sendespule angeordnet, über die ein gemessenes Wegsignal an die bereits genannte Funktionssteuerung des Getriebes übermittelt wird.

Ein aus einem Cursorreiter 8 und einem Cursorträger 10 zusammengesetzter, als Ganzes mit 12 bezeichneter Sensorschlitten ist grundsätzlich in einer zur Zeichenebene senkrechten Richtung verschiebbar im bzw. am Sensorgehäuse 4 angeordnet. Er kann jedoch an diesem auch arretiert werden, wie noch dargelegt wird. Am Cursorreiter 8 ist ein Rastvorsprung 14 angeordnet, welcher mit einer als Umfangsnut ausgebildeten Rastausnehmung 16 einer ebenfalls in einer Richtung senkrecht zur Zeichenebene verschiebbaren Schaltschiene 18 in Eingriff bringbar ist.

Der Cursorreiter 8 ist in einer zur Verschiebebewegung des Sensorschlittens 12 senkrechten, dem Doppelpfeil 20 entsprechenden Richtung verstellbar am Cursorträger 10 gelagert. Zwischen dem Cursorträger 10 und dem Cursorreiter 8 sind Federmittel 22, im dargestellten Ausführungsbeispiel eine Schrauben-Druckfeder, angeordnet, welche den Cursorträger 10 und den Cursorreiter 8 auseinander spreizen, wobei der Cursorträger 10 durch am Cursorreiter 8 bzw. am Cursorträger 10 ausgebildete Anschlagmittel 24 bzw. 26 in der dargestellten, vollständig auseinander gespreizten Stellung gehalten wird.

Der Cursorreiter 8 ist mit seitlichen Haltearmen 28, 30 ausgestattet, die am Sensorgehäuse 4 ausgebildete Haltearme 32, 34 hintergreifen, wie aus Fig. 1 ersichtlich ist. Dabei werden an den Haltearmen 28, 30 einerseits bzw. an den Haltearmen 32, 44 andererseits ausgebildete Anschlagflächen 36 bzw. 38 durch die Federmittel 22 zur gegenseitigen Anlage gebracht.

Es sei an dieser Stelle bemerkt, dass die in Fig. 1 dargestellte Anordnung einen Anlieferzustand der Wegsensoranordnung 2 beispielsweise bei einem Getriebehersteller darstellt, also einen Zustand, bevor die Wegsensoranordnung 2 im Getriebegehäuse 6 montiert ist.

Wie Fig. 1 weiter erkennen lässt, sind an den Anschlagflächen 36 bzw. 38 zusammenwirkende Arretierungsvorsprünge 40 bzw. Arretierungsausnehmungen 42 ausgebildet, welche im dargestellten Anlieferzustand miteinander in Eingriff stehen und eine Verschiebung des Sensorschlittens 12 gegenüber dem Sensorgehäuse 4 in Richtung senkrecht zur Zeichnungsebene verhindern, so dass der Sensorschlitten 12 eine definierte Position gegenüber dem Sensorgehäuse 4 hat.

Wenn die Wegsensoranordnung 2 bzw. das Sensorgehäuse 4 mit dem Getriebegehäuse 6 verbunden wird, legt sich zunächst der am Cursorreiter 8 angeordnete Rastvorsprung 14 an den Außenumfang 44 der Schaltschiene 18 an. Dadurch wird der Cursorreiter 8 in Richtung des Pfeiles 46 hin zum Cursorträger 10 verstellt, bis an den Haltearmen 32 und 34 ausgebildete Anschlagflächen 48 zur Anlage an am Cursorreiter 8 ausgebildeten Anschlagflächen 50 kommen. Dabei gelangen wiederum an den Anschlagflächen 48 bzw. 50 ausgebildete Arretierungsausnehmungen 52 bzw. Arretierungsvorsprünge 54 miteinander in Eingriff, so dass auch in dieser Position, die als Montagezustand bezeichnet wird, der Sensorschlitten 12 gegenüber dem Sensorgehäuse 4 in Verschieberichtung, also in einer Richtung senkrecht zur Zeichenebene arretiert ist.

Anschließend wird die Schaltschiene 18 aus der Zeichnungsebene heraus so weit verschoben, dass der Rastvorsprung 14 in die Rastausnehmung 16 einrastet, wobei der Rastvorsprung 14 am Boden 56 der Rastausnehmung 14 ansteht. In dieser Position, die als Betriebszustand bezeichnet wird, liegen weder die Anschlagflächen 36, 38 noch die Anschlagflächen 48, 50 aneinander an, so dass auch die zugeordneten Arretierungsvorsprünge 40, 42 bzw. 52, 54 nicht im Eingriff sind, und der Sensorschlitten 8 gegenüber dem Sensorgehäuse 4 in Verschieberichtung beweglich ist.

Damit ist der Montagevorgang der Wegsensoranordnung 2 im Getriebegehäuse 6 abgeschlossen.

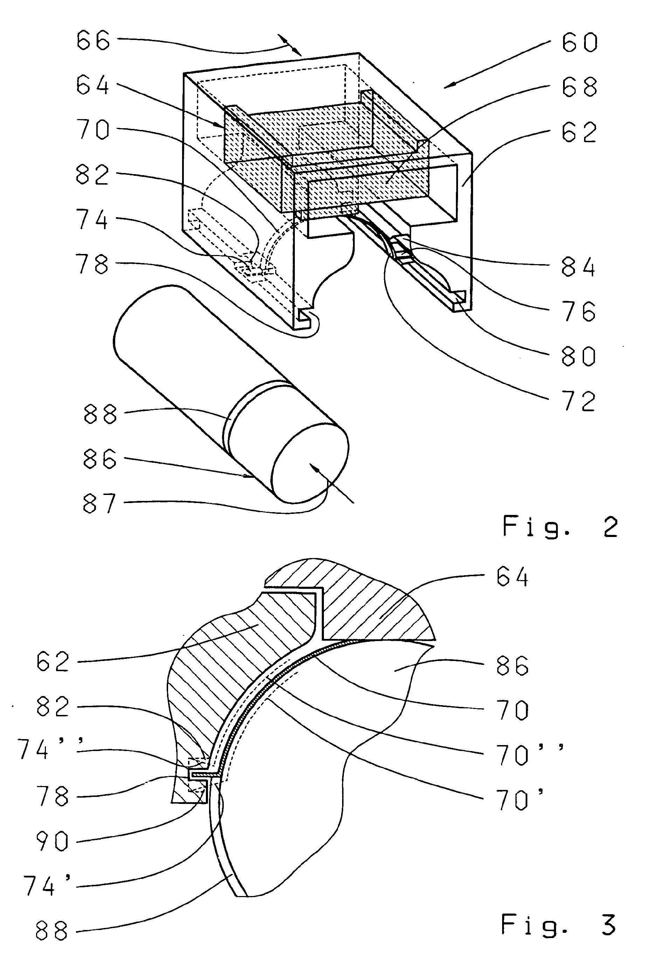

Fig. 2 zeigt ein weiteres Ausführungsbeispiel einer Wegsensoranordnung 60, die wiederum beispielsweise zum Erfassen des Verschiebeweges einer Schaltschiene in einem Zahnradschaltgetriebe verwendet werden kann.

In einem Sensorgehäuse 62 ist ein Sensorschlitten 64 in Richtung des Doppelpfeiles 66 verschiebbar angeordnet. Der Sensorschlitten 64 umfasst einen Cursorträger 68, an dessen Unterseite zwei federnd elastische Arme 70, 72 angeordnet sind. An den äußeren Enden der beiden Arme 70 bzw. 72 sind seitlich abstehende Rastnasen 74 bzw. 76 angeordnet, die in am Sensorgehäuse ausgebildete, in der durch den Doppelpfeil 66 bezeichneten Verschieberichtung verlaufende Führungsnuten 78 bzw. 80 eingreifen.

Die Führungsnuten 78, 80 haben jeweils an einer bestimmten Stelle ihrer Längserstreckung oben und unten Ausnehmungen, von denen in Fig. 2 aus Gründen einer besseren Übersichtlichkeit nur die oberen Ausnehmungen 82 bzw. 84 bezeichnet sind. Diese Ausnehmungen können die Rastnasen 74 bzw. 76 aufnehmen, wenn die Arme 70 bzw. 72 nach oben oder nach unten gebogen werden, wie noch im einzelnen insbesondere anhand der Fig. 3 beschrieben wird.

In dem in Fig. 2 dargestellten Anlieferzustand sind die Arme 70, 72 weitgehend entspannt und greifen in die nicht dargestellten unteren Ausnehmungen der Führungsnuten 78 und 80 ein, so dass der Sensorschlitten 64 in Richtung des Doppelpfeiles 66 arretiert ist.

Wenn die Wegsensoranordnung 60 in einem nicht dargestellten Getriebegehäuse montiert wird, dann legen sich die Arme 70 und 72 an die Umfangsfläche der Schaltschiene 86 an und werden elastisch nach oben gebogen, bis die Rastnasen 74, 76 in die oberen Ausnehmungen 82, 84 der Führungsnuten 78, 80 eingreifen. Auch in diesem Montagezustand ist der Sensorschlitten 64 in Richtung des Doppelpfeiles 66 arretiert.

In einem nächsten Montageschritt wird die Schaltschiene 86 im vorliegenden Fall in Längsrichtung 87 verschoben, bis die Arme 70, 72 mit den daran angeordneten Rastnasen 74, 76 in die als Umfangsnut ausgebildete Rastausnehmung 88 eingreifen. Dabei legen sich die Arme 70, 72 an den Boden der Rastausnehmung 88 an, wobei sie eine Zwischenstellung einnehmen, bei der die Rastnasen 74, 76 mit den Führungsnuten 78, 80 fluchten, so dass der Sensorschlitten 64 in Richtung des Doppelpfeiles 66 nicht mehr arretiert ist.

Fig. 3 zeigt in einem Querschnitt teilweise das Sensorgehäuse 62, den Sensorschlitten 64 mit einem elastischen Arm 70 und die Schaltschiene 86 mit der Rastausnehmung 88. Wie weiter vorne erläutert wurde, nimmt der Arm 70 im Anlieferzustand eine untere Stellung 70' ein, bei der die zugeordnete Rastnase 74' in eine untere Ausnehmung 90 der Führungsnut 78 eingreift, so dass der Sensorschlitten 64 in Richtung senkrecht zur Zeichenebene arretiert ist.

Bei der Montage dieser Wegsensoranordnung wird der Arm zunächst durch Anlage am Außenumfang der Schaltschiene 86 nach oben in die mit 70" bezeichnete Stellung gebogen, wobei die zugeordnete Rastnase 74" in die obere Ausnehmung 82 der Führungsschiene 78 eingreift, so dass in diesem Montagezustand der Sensorschlitten 64 wiederum in der Verschieberichtung 66 arretiert ist.

Wenn durch Verschieben der Schaltschiene 86 in Längsrichtung 87 der Arm 70 in die Rastausnehmung 88 fallen kann, wird dieser durch den Boden dieser Rastausnehmung in einer mittleren Position gehalten, bei der die Rastnase 74 sich in der Führungsnut 78 frei verschieben und der Sensorschlitten 64 von der Schaltschiene 86 zur Wegmessung mitgenommen werden kann.

### Bezugszeichen

- 2: Wegsensoranordnung
- 3: Leiterplatte mit Sendespule
- 4: Sensorgehäuse
- 6: Getriebegehäuse
- 8: Cursorreiter
- 10: Cursorträger
- 12: Sensorschlitten
- 14: Rastvorsprung
- 16: Rastausnehmung
- 18: Schaltschiene
- 20: Doppelpfeil
- 22: Federmittel
- 24: Anschlagmittel
- 26: Anschlagmittel
- 28: Haltearm
- 30: Haltearm
- 32: Haltearm
- 34: Haltearm
- 36: Anschlagfläche
- 38: Anschlagfläche
- 40: Arretierungsvorsprünge
- 42: Arretierungsausnehmungen
- 44: Außenumfang
- 46: Pfeil
- 48: Anschlagflächen
- 50: Anschlagflächen
- 52: Arretierungsausnehmungen
- 54: Arretierungsvorsprünge
- 56: Boden
- 60: Wegsensoranordnung
- 62: Sensorgehäuse
- 64: Sensorschlitten
- 66: Doppelpfeil
- 68: Cursorträger
- 70: Arme
- 70': Arm in unterer Stellung
- 70": Arm in oberer Stellung
- 72: Arme
- 74: Rastnase
- 74': Rastnase (in unterer Stellung)
- 74": Rastnase (in oberer Stellung)
- 76: Rastnase
- 78: Führungsnut
- 80: Führungsnut
- 82: Ausnehmung
- 84: Ausnehmung
- 86: Schaltschiene
- 87: Längsrichtung
- 88: Rastausnehmung
- 90: Ausnehmung

## Patentansprüche

1. Wegsensoranordnung zum Erfassen eines Verschiebeweges eines zweiten mechanischen Bauteils (18, 86) gegenüber einem ersten Bauteil (6), umfassend
ein an dem ersten Bauteil (6) fest montierbares Sensorgehäuse (4, 62) und
einen mit dem Sensorgehäuse (4, 62) zusammenwirkenden und mit dem zweiten Bauteil (18, 86) koppelbaren Sensorschlitten (12, 64), an welchem Kopplungsmittel (14, 70, 72) vorgesehen sind, welche mit dem zweiten Bauteil (18, 86) in Eingriff bringbar sind,
sowie einen den Verschiebeweg erfassenden Wegsensor,
wobei der Sensorschlitten (12, 64) im Sensorgehäuse (4, 62) im montierten Zustand des Sensorgehäuses (4, 62) in Richtung des Verschiebeweges des zweiten Bauteils (18, 86) verschiebbar gelagert ist,
**dadurch gekennzeichnet, dass** die Kopplungsmittel (14, 70, 72) des Sensorschlittens (12, 64) wenigstens ein federnd vorgespanntes Rastelement (14, 70, 72) umfassen, welches so ausgeführt ist, dass es im montierten Zustand des Sensorgehäuses (4, 62) bei einer vorgegebenen Verschiebestellung des ersten Bauteils (6) gegenüber dem zweiten Bauteil (18, 86) selbsttätig mit dem zweiten Bauteil (18, 86) verrastet,
wobei das Rastelement (14, 70, 72) des Sensorschlittens (12, 64) gegenüber dem Sensorgehäuse (4, 62) zwischen einer ersten Endposition und einer zweiten Endposition verstellbar ist,
und wobei in der ersten und der zweiten Endposition des Rastelements (14, 70, 72) an dem Rastelement (14, 70, 72) oder an den damit verbundenen Bauelementen (8) ausgebildete Arretierungsmittel (42, 54, 74, 76) mit an dem Sensorgehäuse (4, 62) ausgebildeten Arretierungsmitteln (40, 52, 82, 84, 90) im Eingriff sind, welche eine Verschiebung des Sensorschlittens (12, 64) im Sensorgehäuse (4, 62) verhindern, wobei die Arretierungsmittel (40, 42, 52, 54, 74, 76, 82, 84, 90) bei einer zwischen der ersten und zweiten Endposition liegenden Zwischenposition des Rastelements (14, 70, 72) außer Eingriff sind.

2. Wegsensoranordnung nach Anspruch 1, **dadurch gekennzeichnet, dass** der Sensorschlitten (12) einen am Sensorgehäuse (4) in einer zur Verschiebebewegung des Sensorschlittens (12) senkrechten Richtung zwischen einer jeweils durch Anschläge bestimmten ersten Endposition und einer zweiten Endposition verstellbaren Cursorreiter (8) umfasst, an welchem ein mit einer Rastausnehmung (16) des zweiten Bauteils (18) in Eingriff bringbarer Rastvorsprung (14) ausgebildet ist, und dass der Cursorreiter (8) einen in der gleichen Richtung bewegbaren Cursorträger (10) trägt, wobei zwischen Cursorreiter (8) und Cursorträger (10) Federmittel (22) angeordnet sind, welche einerseits den Cursorträger (10) an das Sensorgehäuse (4) andrücken und andererseits den Cursorreiter (8) in Richtung der ersten Endposition drücken.

3. Wegsensoranordnung nach Anspruch 2, **dadurch gekennzeichnet, dass** an jeweils die erste Endposition und die zweite Endposition des Cursorreiters (8) bestimmenden Anschlagflächen (36, 38) zusammenwirkende Arretierungsvorsprünge (40) oder Arretierungsausnehmungen (42) ausgebildet sind.

4. Wegsensoranordnung nach Anspruch 1, **dadurch gekennzeichnet, dass** der Sensorschlitten (64) einen in einer zu seiner Verschieberichtung (66) senkrechten Richtung unbeweglichen Cursorträger (68) umfasst,
an welchem als Rastelement wenigstens ein federnd elastischer Arm (70, 72) vorgesehen ist, an dem als Arretierungsmittel eine zwischen einer ersten Endposition und einer zweiten Endposition quer zur Verschieberichtung bewegbare Rastnase (74, 76) angeordnet ist, die in den beiden Endpositionen jeweils in eine am Sensorgehäuse (62) als Arretierungsmittel ausgebildete Rastausnehmung (82, 84, 90) eingreift.

5. Wegsensoranordnung nach Anspruch 4, zum Erfassen des Verschiebeweges des als Schaltschiene mit einem im wesentlichen runden Querschnitt (86) ausgeführten zweiten Bauteils, **dadurch gekennzeichnet, dass** der Cursorträger (68) als Rastelemente zwei federnd elastische Arme (70, 72) aufweist, welche die Schaltschiene (86) umgreifen können und als Arretierungsmittel jeweils die Rastnase (74, 76) tragen.

6. Verfahren zum Montieren einer Wegsensoranordnung gemäß einem der Ansprüche 1 bis 5, **gekennzeichnet durch** folgende Verfahrensschritte:
- das Sensorgehäuse (4, 62) wird am ersten Bauteil (6) montiert;
- die Kopplungsmittel (14, 70, 72) des Sensorschlittens (12, 64) werden mit Kopplungsmitteln (16, 88) des zweiten Bauteils (18, 86) in Eingriff gebracht.

7. Verfahren nach Anspruch 6, **dadurch gekennzeichnet , dass** das Sensorgehäuse (4, 62) am ersten Bauteil (6) montiert wird, und dass danach das zweite Bauteil (18, 86) in die vorgegebene Verschiebestellung bewegt wird, bei der das wenigstens eine Rastelement (14, , 70, 72) des Sensorschlittens (12, 64) in das zweite Bauteil (18, 86) einrastet.

8. Verfahren nach Anspruch 7, **dadurch gekennzeichnet, dass** das Sensorgehäuse (4, 62) am ersten Bauteil (6) montiert wird, wobei das wenigstens eine Rastelement (14, 70, 72) des Sensorschlittens (12, 64) durch Anlage am zweiten Bauteil (18, 86) aus der ersten, den Sensorschlitten (12, 64) in Verschieberichtung arretierenden Endposition in die zweite arretierende Endposition verstellt wird, und dass anschließend das zweite Bauteil (18, 86) in die vorgegebene Verschiebeposition verstellt wird, wobei das wenigstens eine Rastelement (14, 70, 72) des Sensorschlittens (12, 64) aus der zweiten Endposition in die Zwischenposition gelangt, bei der die Arretierungsmittel (40, 42, 52, 54, 74, 76, 82, 84, 90) außer Eingriff sind.

## Claims

1. Travel sensor arrangement for detecting a displacement travel of a second mechanical component (18, 86) in relation to a first component (6), comprising
a sensor housing (4, 62) which can be fixedly mounted on the first component (6) and
a sensor carriage (12, 64) which interacts with the sensor housing (4, 62) and which can be coupled to the second component (18, 86) and on which coupling means (14, 70, 72) which can engage with the second component (18, 86) are provided,
and also a travel sensor which detects the displacement travel,
wherein the sensor carriage (12, 64) is mounted, such that it can be displaced in the direction of the displacement travel of the second component (18, 86), in the sensor housing (4, 62) in the mounted state of the sensor housing (4, 62),
**characterized in that** the coupling means (14, 70, 72) of the sensor carriage (12, 64) comprise at least one spring-prestressed latching element (14, 70, 72) which is designed such that it automatically latches with the second component (18, 86) given a predefined displacement position of the first component (6) in relation to the second component (18, 86) in the mounted state of the sensor housing (4, 62),
wherein the latching element (14, 70, 72) of the sensor carriage (12, 64) can be adjusted between a first and position and a second end position in relation to the sensor housing (4, 62),
and wherein locking means (42, 54, 74, 76), which are formed on the latching element (14, 70, 72) or on the structural elements (8) which are connected to the said latching element, engage with locking means (40, 52, 82, 84, 90), which are formed on the sensor housing (4, 62), in the first and the second end position of the latching element (14, 70, 72), the said locking means preventing displacement of the sensor carriage (12, 64) in the sensor housing (4, 62), wherein the locking means (40, 42, 52, 54, 74, 76, 82, 84, 90) are not in engagement in an intermediate position of the latching element (14, 70, 72) which is situated between the first and the second end position.

2. Travel sensor arrangement according to Claim 1, **characterized in that** the sensor carriage (12) comprises a cursor slide (8) which can be adjusted on the sensor housing (4) between a first end position and a second end position, which are in each case determined by stops, in a direction perpendicular to the displacement movement of the sensor carriage (12), a latching projection (14) which can engage with a latching recess (16) of the second component (18) being formed on the said cursor slide, and **in that** the cursor slide (8) is fitted with a cursor carrier (10) which can be moved in the same direction, wherein spring means (22) are arranged between the cursor slide (8) and the cursor carrier (10), the said spring means firstly pressing the cursor carrier (10) against the sensor housing (4) and secondly pressing the cursor slide (8) in the direction of the first end position.

3. Travel sensor arrangement according to Claim 2, **characterized in that** interacting locking projections (40) or locking recesses (42) are formed on stop faces (36, 38) which respectively determine the first end position and the second end position of the cursor slide (8) .

4. Travel sensor arrangement according to Claim 1, **characterized in that** the sensor carriage (64) comprises a cursor carrier (68) which does not move in a direction perpendicular to its displacement direction (66),
at least one spring-elastic arm (70, 72) being provided on the said cursor carrier as a latching element, a latching lug (74, 76) which can move transverse to the displacement direction between a first end position and a second end position and which engages in each case in a latching recess (82, 84, 90), which is formed as a locking means on the sensor housing (62), in the two end positions being arranged as a locking means on the said arm.

5. Travel sensor arrangement according to Claim 4 for detecting the displacement travel of the second component which is designed as a shift rail with a substantially round cross section (86), **characterized in that** the cursor carrier (68) has as latching elements two spring-elastic arms (70, 72) which can surround the shift rail (86) and in each case carry the latching lug (74, 76) as a locking means.

6. Method for mounting a travel sensor arrangement according to one of Claims 1 to 5, **characterized by** the following method steps:
- the sensor housing (4, 62) is mounted on the first component (6) ;
- the coupling means (14, 70, 72) of the sensor carriage (12, 64) is brought into engagement with coupling means (16, 88) of the second component (18, 86).

7. Method according to Claim 6, **characterized in that** the sensor housing (4, 62) is mounted on the first component (6), and **in that** the second component (18, 86) is then moved into the predefined displacement position in which the at least one latching element (14, 70, 72) of the sensor carriage (12, 64) latches into the second component (18, 86).

8. Method according to Claim 7, **characterized in that** the sensor housing (4, 62) is mounted on the first component (6), wherein the at least one latching element (14, 70, 72) of the sensor carriage (12, 64) is adjusted from the first end position, which locks the sensor carriage (12, 64) in the displacement direction, to the second locking end position by virtue of abutment against the second component (18, 86), and **in that** the second component (18, 86) is then adjusted to the predefined displacement position, wherein the at least one latching element (14, 70, 72) of the sensor carriage (12, 64) moves from the second end position to the intermediate position in which the locking means (40, 42, 52, 54, 74, 76, 82, 84, 90) are not in engagement.

## Revendications

1. Dispositif de capteur de déplacement pour détecter une course de déplacement d'un deuxième composant mécanique (18, 86) par rapport à un premier composant (6), comprenant
un boîtier de capteur (4, 62) monté fixement sur le premier composant (6) et
un chariot de capteur (12, 64) coopérant avec le boîtier de capteur (4, 62) et pouvant être accouplé au deuxième composant (18, 86), sur lequel chariot de capteur sont prévus des moyens d'accouplement (14, 70, 72) qui peuvent être amenés en prise avec le deuxième composant (18, 86),
ainsi qu'un capteur de déplacement détectant la course de déplacement,
le chariot de capteur (12 64) étant monté de manière déplaçable dans le boîtier de capteur (4, 62) dans l'état monté du boîtier de capteur (4, 62) dans la direction de la course de déplacement du deuxième composant (18, 86),
**caractérisé en ce que** les moyens d'accouplement (14, 70, 72) du chariot de capteur (12, 64) comprennent au moins un élément d'encliquetage (14, 70, 72) précontraint par ressort, qui est réalisé de telle sorte que dans l'état monté du boîtier de capteur (4, 62), pour une position de déplacement prédéfinie du premier composant (6) par rapport au deuxième composant (18, 86), il s'encliquète automatiquement avec le deuxième composant (18, 86),
l'élément d'encliquetage (14, 70, 72) du chariot de capteur (12, 64) pouvant être déplacé par rapport au boîtier de capteur (4, 62) entre une première position d'extrémité et une deuxième position d'extrémité,
et des moyens de blocage (42, 54, 74, 76) réalisés dans la première et dans la deuxième position d'extrémité de l'élément d'encliquetage (14, 70, 72) sur l'élément d'encliquetage (14, 70, 72) ou sur les composants (8) connectés à celui-ci étant en prise avec des moyens de blocage (40, 52, 82, 84, 90) réalisés sur le boîtier de capteur (4, 62), lesquels moyens de blocage empêchent un déplacement du chariot de capteur (12, 64) dans le boîtier de capteur (4, 62), les moyens de blocage (40, 42, 52, 54, 74, 76, 82, 84, 90) étant hors d'engagement dans une position intermédiaire de l'élément d'encliquetage (14, 70, 72) située entre la première et la deuxième position d'extrémité.

2. Dispositif de capteur de déplacement selon la revendication 1, **caractérisé en ce que** le chariot de capteur (12) comprend un cavalier de curseur (8) pouvant être déplacé sur le boîtier de capteur (4) dans une direction perpendiculaire au mouvement de déplacement du chariot de capteur (12) entre une première position d'extrémité et une deuxième position d'extrémité déterminées respectivement par des butées, sur lequel cavalier de curseur est réalisée une saillie d'encliquetage (14) pouvant être mise en prise avec un évidement d'encliquetage (16) du deuxième composant (18), et **en ce que** le cavalier de curseur (8) porte un support de curseur (10) déplaçable dans la même direction, des moyens de ressort (22) étant disposés entre le cavalier de curseur (8) et le support de curseur (10), lesquels moyens de ressort pressent d'une part le support de curseur (10) contre le boîtier de capteur (4) et pressent d'autre part le cavalier de curseur (8) dans la direction de la première position d'extrémité.

3. Dispositif de capteur de déplacement selon la revendication 2, **caractérisé en ce que** des saillies de blocage (40) ou des évidements de blocage (42) coopérants sont réalisés sur des surfaces de butée (36, 38) déterminant respectivement la première position d'extrémité et la deuxième position d'extrémité du cavalier de curseur (8).

4. Dispositif de capteur de déplacement selon la revendication 1, **caractérisé en ce que** le chariot de capteur (64) comprend un support de curseur (68) non déplaçable dans une direction perpendiculaire à sa direction de déplacement (66),
sur lequel est prévu, en tant qu'élément d'encliquetage, au moins un bras élastique à ressort (70, 72) sur lequel est disposé, en tant que moyen de blocage, un nez d'encliquetage (74, 76) déplaçable transversalement à la direction de déplacement entre une première position d'extrémité et une deuxième position d'extrémité, lequel nez d'encliquetage vient en prise dans les deux positions d'extrémité à chaque fois dans un évidement d'encliquetage (82, 84, 90) réalisé en tant que moyen de blocage sur le boîtier de capteur (62).

5. Dispositif de capteur de déplacement selon la revendication 4, pour la détection de la course de déplacement du deuxième composant réalisé sous forme de tige de commande avec une section transversale essentiellement ronde (86), **caractérisé en ce que** le support de curseur (68) présente, en tant qu'éléments d'encliquetage, deux bras élastiques à ressort (70, 72), qui peuvent venir en prise autour de la tige de commande (86) et qui portent chacun, en tant que moyen de blocage, le nez d'encliquetage (74, 76).

6. Procédé de montage d'un dispositif de capteur de déplacement selon l'une quelconque des revendications 1 à 5, **caractérisé par** les étapes de procédé suivantes :
- le boîtier de capteur (4, 62) est monté sur le premier composant (6) ;
- les moyens d'accouplement (14, 70, 72) du chariot de capteur (12, 64) sont amenés en prise avec des moyens d'accouplement (16, 88) du deuxième composant (18, 86).

7. Procédé selon la revendication 6, **caractérisé en ce que** le boîtier de capteur (4, 62) est monté sur le premier composant (6), et **en ce qu'**ensuite le deuxième composant (18, 86) est déplacé dans la position de déplacement prédéfinie, dans laquelle l'au moins un élément d'encliquetage (14, 70, 72) du chariot de capteur (12, 64) s'encliquète dans le deuxième composant (18, 86).

8. Procédé selon la revendication 7, **caractérisé en ce que** le boîtier de capteur (4, 62) est monté sur le premier composant (6), l'au moins un élément d'encliquetage (14, 70, 72) du chariot de capteur (12, 64) étant déplacé par application contre le deuxième composant (18, 86), de la première position d'extrémité bloquant le chariot de capteur (12, 64) dans la direction de déplacement, à la deuxième position d'extrémité de blocage, et **en ce qu'**ensuite le deuxième composant (18, 86) est déplacé dans la position de déplacement prédéfinie, l'au moins un élément d'encliquetage (14, 70, 72) du chariot de capteur (12, 64) parvenant depuis la deuxième position d'extrémité dans la position intermédiaire, dans laquelle les moyens de blocage (40, 42, 52, 54, 74, 76, 82, 84 90) sont hors d'engagement.
